# EUROPÄISCHE PATENTANMELDUNG

(11) **EP 2 345 791 A2**
(43) Veröffentlichungstag der Anmeldung: **20.07.2011**
(21) Anmeldenummer: 10191624.5
(22) Anmeldetag: 18.11.2010
(51) Int. Cl.: F01D 1/00, F01D 11/00

(54) **Vanadium basierte Hartstoffbeschichtung einer Windkraftanlagenkomponente**

(30) Priorität: 14.01.2010 DE 102010004661
(71) Anmelder: Siemens Aktiengesellschaft, 80333 München (DE)
(72) Erfinder: Hohle, Andreas Christian, 52477, Alsdorf (DE); Hohmann, Christian, 45473, Mülheim an der Ruhr (DE); Kummer, Claudia, 52066, Aachen (DE); Kölpin, Helmut, 52499, Baesweiler (DE); Li, Ying, 52070, Aachen (DE); Tchemtchoua, Brice, 52070, Aachen (DE)

(57) **Zusammenfassung**

Vanadium basierte Hartstoffbeschichtung einer Windkraftanlagenkomponente

Es wird eine Windkraftanlage (1) offenbart, die mindestens eine Komponente (10) mit einer Oberfläche (12) umfasst. Die Oberfläche (12) ist zumindest teilweise mit einer Hartstoffschicht (13), vorzugsweise einer Vanadium basierten Hartstoffschicht, beschichtet.

## Beschreibung

Vanadium basierte Hartstoffbeschichtung einer Windkraftanlagenkomponente

Die vorliegende Erfindung betrifft eine Windkraftanlage, einen Windpark und ein Verfahren zum Verbessern einer Eigenschaft einer Oberfläche einer Komponente einer Windkraftanlage.

Zur Sicherstellung der erwarteten Lebensdauer von Windkraftanlagen gilt es den Verschleiß der in ihnen verbauten mechanischen Komponenten zu reduzieren. Gleichzeitig gilt es unter dem Aspekt der Wirtschaftlichkeit den Wirkungsgrad der Anlagen zu verbessern.

Bisher werden in Windkraftanlagen thermische Härteverfahren und modifizierte Schmierstoffe eingesetzt, um den Verschleiß, insbesondere der mechanischen Komponenten, zu minimieren oder um den Wirkungsgrad zu verbessern.

Es ist eine erste Aufgabe der vorliegenden Erfindung, eine vorteilhafte Windkraftanlage zur Verfügung zu stellen. Eine zweite Aufgabe der vorliegenden Erfindung besteht darin, einen vorteilhaften Windpark zur Verfügung zu stellen. Darüber hinaus besteht eine dritte Aufgabe der Erfindung darin, ein vorteilhaftes Verfahren zum Verbessern einer Eigenschaft einer Oberfläche einer Komponente einer Windkraftanlage zur Verfügung zu stellen.

Die erste Aufgabe wird durch eine Windkraftanlage nach Anspruch 1 gelöst. Die zweite Aufgabe wird durch einen Windpark nach Anspruch 8 gelöst. Die dritte Aufgabe wird durch ein Verfahren zum Verbessern einer Eigenschaft einer Oberfläche einer Komponente einer Windkraftanlage nach Anspruch 9 gelöst. Die abhängigen Ansprüche beinhalten weitere, vorteilhafte Ausgestaltungen der Erfindung.

Die erfindungsgemäße Windkraftanlage umfasst mindestens eine Komponente mit einer Oberfläche. Die Oberfläche ist zumindest teilweise mit einer Hartstoffschicht beschichtet. Bei der Komponente kann es sich insbesondere um eine mechanische Komponente handeln. Hartstoffschichten bieten gleichzeitig ein hohes Potential sowohl zur Verschleißminimierung, als auch zur Wirkungsgradsteigerung von relativ zueinander bewegten Teilen. Unter einer mechanischen Komponente kann im Zusammenhang mit der vorliegenden Erfindung insbesondere eine Komponente verstanden werden, die eine mechanische Funktion hat oder mechanischer Beanspruchung ausgesetzt ist.

Vorteilhafterweise kann die Oberfläche zumindest teilweise mit einer Vanadium basierten Hartstoffschicht beschichtet sein. Vanadium basierte Hartstoffschichten haben zusätzlich zu den allgemeinen Vorteilen von Hartstoffschichten selbstschmierende Eigenschaften. Die selbstschmierenden Eigenschaften kommen durch die Bildung von Magneli-Phasen, insbesondere der Vanadiumoxide, zustande. Durch die selbstschmierenden Eigenschaften der Vanadium basierten Hartstoffschicht wird das Notlaufverhalten der jeweiligen Komponente signifikant verbessert. Darüber hinaus wird auch das Versagensverhalten der jeweiligen Komponente verbessert.

Die Vanadium basierte Hartstoffschicht kann insbesondere Vanadium-Aluminiumnitrit (VAIN) und/oder Vanadiumoxid umfassen. Wie zuvor bereits erwähnt, hat die Beschichtung durch die Bildung von Magneli-Phasen der Vanadiumoxide selbstschmierende Eigenschaften.

Weiterhin kann die Oberfläche der Komponente Stahl umfassen oder aus Stahl bestehen. Die Oberfläche des Stahls kann zumindest teilweise mit einer Hartstoffschicht, vorzugsweise mit einer Vanadium basierten Hartstoffschicht, beschichtet sein. Bei dem Stahl kann es sich um gehärteten oder ungehärteten Stahl handeln.

Bei der Komponente der Windkraftanlage kann es sich beispielsweise um einen Turm, eine Gondel, einen Rotor, eine Rotornabe, ein Rotorblatt, ein Getriebe, ein Element eines Getriebes, eine Bremse, eine Rotationsachse oder ein Element eines Generators, insbesondere ein mechanisches Element eines Generators, handeln.

Die Hartstoffschicht kann eine Schichtdicke zwischen 10 nm und 100 µm, vorteilhafterweise zwischen 10 nm und 10 µm, aufweisen. Die Oberfläche der erfindungsgemäßen Komponente kann lediglich teilweise, aber auch vollständig mit einem Hartstoff beschichtet sein.

Grundsätzlich kann die Hartstoffbeschichtung, insbesondere die Vanadium basierte Hartstoffschicht auch als Korrosionsschutz für die jeweilige Komponente fungieren.

Der erfindungsgemäße Windpark umfasst mindestens eine erfindungsgemäße Windkraftanlage. Der Windpark hat dieselben Eigenschaften und Vorteile wie die zuvor beschriebene erfindungsgemäße Windkraftanlage. Insoweit wird auf die im Zusammenhang mit der erfindungsgemäßen Windkraftanlage gemachten Ausführungen verwiesen.

Das erfindungsgemäße Verfahren zum Verbessern einer Eigenschaft einer Komponente einer Windkraftanlage zeichnet sich dadurch aus, dass die Oberfläche der Komponente zumindest teilweise mit einem Hartstoff beschichtet wird. Bei der Komponente kann es sich vorzugsweise um eine mechanische Komponente handeln. Vorteilhafterweise kann die Oberfläche zumindest teilweise mit einem Vanadium basierten Hartstoff beschichtet werden. Zu den Vorteilen von Hartstoffschichten und insbesondere Vanadium basierten Hartstoffschichten wird auf die oben gemachten Ausführungen im Zusammenhang mit der erfindungsgemäßen Komponente verwiesen. Vorzugsweise kann die Oberfläche mit Vanadium-Aluminiumnitrit und/oder Vanadiumoxid beschichtet werden.

Mithilfe des erfindungsgemäßen Verfahren kann beispielsweise der Wirkungsgrad und/oder die Verschleißfestigkeit, insbesondere von Stoßflächen oder Lagerflächen, erhöht werden. Die erzielte Beschichtung kann zusätzlich zur Verschleißminimierung und Wirkungsgradsteigerung auch als Korrosionsschutz dienen.

Im Rahmen des erfindungsgemäßen Verfahrens kann die Oberfläche der Komponente lediglich teilweise, aber auch vollständig mit einem Hartstoff beschichtet werden. Die Oberfläche kann zum Beispiel durch physikalische Gasphasenabscheidung (physical vapor deposition, PVD) beschichtet werden. Zudem kann die Oberfläche Stahl umfassen. Bei dem Stahl kann es sich um gehärteten oder ungehärteten Stahl handeln. Der Hartstoff kann zumindest teilweise auf den Stahl aufgebracht werden.

Vorzugsweise kann die Oberfläche zumindest teilweise mit einem Hartstoff, insbesondere einem Vanadium basierten Hartstoff, mit einer Schichtdicke zwischen 10 nm und 100 µm, vorteilhafterweise zwischen 10 nm und 10 µm, beschichtet werden.

Weitere Merkmale, Eigenschaften und Vorteile der vorliegenden Erfindung werden im Folgenden anhand eines Ausführungsbeispiels unter Bezugnahme auf die beigefügten Figuren näher erläutert.
- Figur 1: zeigt schematisch eine Windkraftanlage.
- Figur 2: zeigt schematisch einen Schnitt durch einen Teil einer Komponente einer Windkraftanlage.

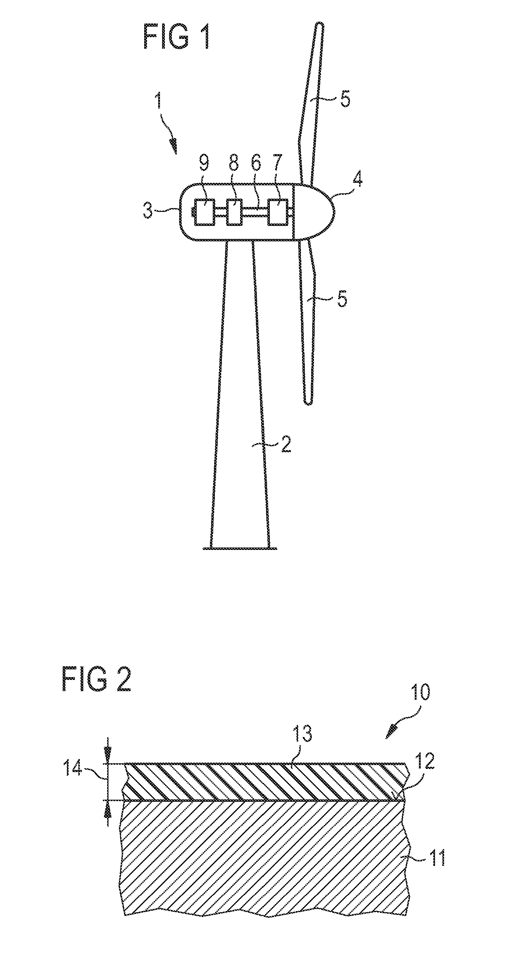

Im Folgenden wird ein Ausführungsbeispiel der Erfindung anhand der Figuren 1 und 2 näher erläutert. Die Figur 1 zeigt schematisch eine Windkraftanlage 1. Die Windkraftanlage 1 umfasst einen Turm 2, eine Gondel 3 und eine Rotornabe 4. Die Gondel 3 ist auf dem Turm 2 angeordnet. An der Gondel 3 ist die drehbar gelagerte Rotornabe 4 angeordnet. An der Rotornabe 4 ist mindestens ein Rotorblatt 5 befestigt.

Die Windkraftanlage 1 umfasst weiterhin mindestens eine Rotationsachse 6, ein Getriebe 7, eine Bremse 8 und einen Generator 9. Die Rotationsachse 6, das Getriebe 7, die Bremse 8 und der Generator 9 sind im Inneren der Gondel 3 angeordnet. Grundsätzlich ist im Getriebe 7 ein Achsabstand möglich. Verschiedene Komponenten können also unterschiedliche Rotationsachsen haben.

Die Figur 2 zeigt schematisch einen Schnitt durch einen Teil einer mechanischen Komponente 10 der Windkraftanlage 1. Bei der mechanischen Komponente 10 kann es sich zum Beispiel um den Turm 2, die Gondel, die Rotornabe 4, das Rotorblatt 5, das Getriebe 7, die Bremse 8, die Rotationsachse 6 oder den Generator 9 handeln. Bei der mechanischen Komponente 10 kann es sich ebenfalls um ein Element der zuvor genannten Komponenten handeln.

Die mechanische Komponente 10 umfasst im vorliegenden Ausführungsbeispiel gehärteten oder ungehärteten Stahl 11. Der Stahl 11 umfasst eine Oberfläche 12, die mit einer Hartstoffschicht 13 beschichtet ist. Vorzugsweise handelt es sich bei der Hartstoffschicht um eine Vanadium basierte Hartstoffschicht.

Die Hartstoffschicht kann zum Beispiel mit Hilfe von physikalischer Gasphasenabscheidung auf die Oberfläche 12 des Stahls 11 aufgebracht werden. Die Hartstoffschicht 13 hat eine Schichtdicke 14 zwischen 10 nm und 100 µm. Vorzugsweise ist die Hartstoffschicht maximal einige µm dick.

## Patentansprüche

1. Windkraftanlage (1), die mindestens eine Komponente (10) mit einer Oberfläche (12) umfasst,
**dadurch gekennzeichnet, dass**
die Oberfläche (12) zumindest teilweise mit einer Hartstoffschicht (13) beschichtet ist.

2. Windkraftanlage (1) nach Anspruch 1,
**dadurch gekennzeichnet, dass**
die Oberfläche (12) zumindest teilweise mit einer Vanadium basierten Hartstoffschicht beschichtet ist.

3. Windkraftanlage (1) nach Anspruch 2,
**dadurch gekennzeichnet, dass**
die Vanadium basierte Hartstoffschicht Vanadium-Aluminiumnitrit und/oder Vanadiumoxid umfasst.

4. Windkraftanlage (1) nach einem der Ansprüche 1 bis 3,
**dadurch gekennzeichnet, dass**
die Oberfläche (12) der Komponente Stahl umfasst, wobei die Oberfläche (12) des Stahls zumindest teilweise mit einer Hartstoffschicht (13) beschichtet ist.

5. Windkraftanlage (1) nach einem der Ansprüche 1 bis 4,
**dadurch gekennzeichnet, dass**
es sich bei der Komponente (10) um einen Turm (2), eine Gondel (3), einen Rotor, eine Rotornabe (4), ein Rotorblatt (5), ein Getriebe (7), ein Element eines Getriebes, eine Bremse (8), eine Rotationsachse (6) oder ein Element eines Generators (9) handelt.

6. Windkraftanlage (1) nach einem der Ansprüche 1 bis 5,
**dadurch gekennzeichnet, dass**
die Hartstoffschicht (13) eine Schichtdicke (14) zwischen 10nm und 100µm aufweist.

7. Windkraftanlage (1) nach Anspruch 6,
**dadurch gekennzeichnet, dass**
die Hartstoffschicht (13) eine Schichtdicke (14) zwischen 10nm und 10µm aufweist.

8. Windpark, der mindestens eine Windkraftanlage (1) nach einem der Ansprüche 1 bis 7 umfasst.

9. Verfahren zum Verbessern einer Eigenschaft einer Oberfläche (12) einer Komponente (10) einer Windkraftanlage (1),
**dadurch gekennzeichnet, dass**
die Oberfläche (12) zumindest teilweise mit einem Hartstoff (13) beschichtet wird.

10. Verfahren nach Anspruch 9,
**dadurch gekennzeichnet, dass**
die Oberfläche (12) zumindest teilweise mit einem Vanadium basierten Hartstoff beschichtet wird.

11. Verfahren nach Anspruch 9 oder 10,
**dadurch gekennzeichnet, dass**
die Oberfläche (12) mit Vanadium-Aluminiumnitrit und/oder Vanadiumoxid beschichtet wird.

12. Verfahren nach einem der Ansprüche 9 bis 11,
**dadurch gekennzeichnet, dass**
die Oberfläche (12) durch physikalische Gasphasenabscheidung beschichtet wird.

13. Verfahren nach einem der Ansprüche 9 bis 12,
**dadurch gekennzeichnet, dass**
die Oberfläche (12) Stahl umfasst und der Hartstoff zumindest teilweise auf den Stahl aufgebracht wird.

14. Verfahren nach einem der Ansprüche 9 bis 13,
**dadurch gekennzeichnet, dass**
die Oberfläche (12) zumindest teilweise mit einem Hartstoff mit einer Schichtdicke (14) zwischen 10nm und 100µm beschichtet wird.
